# EUROPÄISCHE PATENTSCHRIFT

(11) **EP 2 176 671 B1**
(45) Veröffentlichungstag und Bekanntmachung des Hinweises auf die Patenterteilung: **29.12.2010**
(21) Anmeldenummer: 08785919.5
(22) Anmeldetag: 04.07.2008
(51) Int. Cl.: G01P 1/02, G01D 11/24, H01R 43/02, B29C 45/16, B29C 45/33, H01R 43/24

(54) **VERFAHREN ZUR HERSTELLUNG EINES BEWEGUNGSSENSORS**
PROCESS FOR PRODUCING A MOTION SENSOR
PROCÉDÉ DE FABRICATION D'UN DÉTECTEUR DE MOUVEMENT

(30) Priorität: 02.08.2007 DE 102007036264
(43) Veröffentlichungstag der Anmeldung: 21.04.2010
(73) Patentinhaber: Robert Bosch GmbH, 70442 Stuttgart (DE)
(72) Erfinder: WEYRICH, Gerd, 99842 Ruhla (DE); BISCHOF, Rolf, 99891 Fischbach (DE); SCHULZE, Steffen, 99817 Eisenach (DE)
(86) Internationale Anmeldenummer: PCT/EP2008/058662
(87) Internationale Veröffentlichungsnummer: WO 2009/015990

(56) Entgegenhaltungen:
- DE-A1- 4 422 739
- DE-A1-102004 033 284

## Beschreibung

### Stand der Technik

Die Erfindung geht aus von einem Verfahren zur Herstellung eines Bewegungssensors nach der Gattung des unabhängigen Anspruchs.

Aus der DE 10 2004 033 284 A1 sind bereits ein Verfahren und eine Vorrichtung zur Herstellung eines Kunststoffvergusses der elektrischen Baugruppe eines Bewegungssensors und deren Anschlusskabel bekannt, wobei die Teile in einem in ein Spritzgießwerkszeug integrierbaren, wieder verwendbaren Hilfswerkzeug positioniert und ausgerichtet werden. Die elektrische Baugruppe und das Anschlusskabel werden in dem Hilfswerkzeug durch Schweißen oder Löten miteinander verbunden und anschließend in dem Spritzwerkzeug mit Kunststoff umhüllt, wobei die Teile vor ihrem Endverguss aus dem Hilfswerkzeug entnommen und in ein anderes Spritzgießwerkzeug für den Endverguss eingebracht werden. Auf diese Weise wird eine direkte Kunststoffumspritzung der Teile ohne zusätzlichen, in der Vergussmasse verbleibenden Träger ermöglicht unter Einhaltung einer vorgegebenen Positionierung der zu umspritzenden Teile. Durch die Wiederverwendbarkeit des Hilfswerkzeugs werden die Kosten für einen zusätzlichen Träger der Bauteile eingespart. Die Umsetzung der Bauteile und des Hilfswerkzeuges bedingt jedoch zusätzliche Arbeitsschritte und eine spezielle Vorrichtung, wodurch der Fertigungsaufwand und die Fertigungskosten erhöht werden.

### Offenbarung der Erfindung

Das erfindungsgemäße Verfahren mit den Merkmalen des unabhängigen Anspruchs hat den Vorteil, dass die Herstellungskosten des Bewegungssensors durch eine Reduzierung der Arbeitsschritte, insbesondere hinsichtlich der Bestückung eines Halters oder eines Hilfswerkzeuges, deutlich reduziert werden können. Die Ummantelung der elektrischen Baugruppe, insbesondere der integrierten Schaltung mit der Messwertgeberanordnung ist weniger störanfällig und Beschädigungen des IC-Bausteines bei der Umspritzung können weitgehend ausgeschlossen werden, da eventuelle Hohllagen des IC oder ungleichmäßige Druckbelastungen vermieden werden. Zusätzlich können der Platzbedarf für die Fertigungslinie reduziert und die Kosten für die Maschinen, Anlagen und Einrichtungen verringert und die Anbindung des Spritzgießprozesses an vorhandene Fertigungsabläufe erleichtert werden.

Besonders vorteilhaft ist es, wenn der Spritzvorgang der elektrischen Baugruppe in einer Spritzgießmaschine mit zwei unterschiedlichen Spritzeinheiten durchgeführt wird, welche jeweils hinsichtlich des aktuellen Fertigungsstandes optimiert werden können. Hierbei ist es insbesondere zweckmäßig, wenn der erste Spritzvorgang zur Arretierung und Fixierung der Bauteile mit einer Heißkanaldüse durchgeführt und der anschließende zweite Spritzvorgang für die endgültige Ummantelung über einen Kaltkanal ausgeführt wird, wobei durch die Verwendung der Heißkanaldüse beim ersten Spritzvorgang der Spritzprozess beschleunigt und Kunststoffmaterial eingespart wird und dabei düsenseitig bereits die Endkontur des Sensors ausgebildet werden kann. Hierbei ist es weiterhin vorteilhaft, dass die beiden Spritzanordnungen für den ersten und den zweiten Spritzvorgang in unterschiedlichen Ebenen des Werkzeuges angeordnet werden können, wodurch der Zugang zu den zu umspritzenden Teilen erleichtert wird und eine Umsetzung der Bauteile entfällt.

Weitere Einzetbeiten und vorteilhafte Ausgestaltungen der Erfindung ergeben sich aus den abhängigen Anspruchen und der Beschreibung der bevorzugten Durchführung des erfindungsgemäßen Verfahrens.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine perspektivische Darstellung der zu umspritzenden elektri- schen Baugruppe eines Bewegungssensors,
- Figur 2: eine Prinzipdarstellung der verwendeten Spritzgießmaschine mit eingelegter Baugruppe,
- Figur 3: einen Schnitt durch die verwendete Spritzgießmaschine,
- Figur 4a: das Prinzip einer Rundtisch-Spritzgießmaschine mit zwei Statio- nen,
- Figur 4b: das Prinzip einer Rundtisch-Spritzgießmaschine mit drei Stationen und
- Figur 5: eine Darstellung des fertig umspritzten Bewegungssensors mit zugeordnetem Geberrad.

### Ausführungsformen der Erfindung

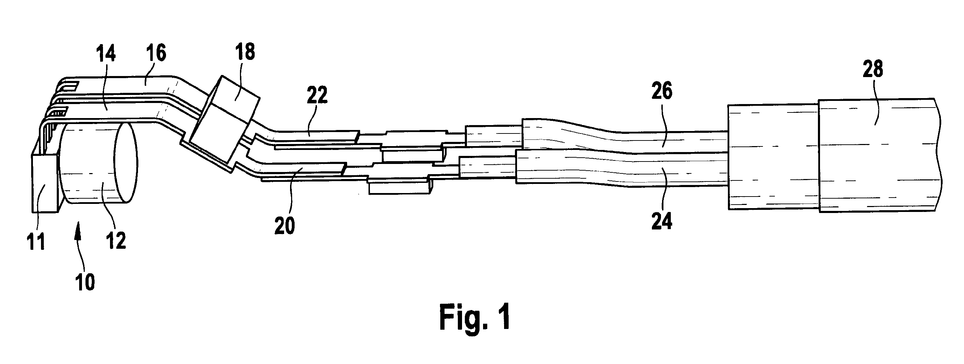

In Figur 1 ist die gemäß dem vorgeschlagenen Verfahren mit thermoplastischem Kunststoff zu umspritzende elektrische Baugruppe 10 eines Drehzahlsensors zur Erfassung der Raddrehung eines Kraftfahrzeuges dargestellt. Diese enthält einen IC-Baustein 11 mit einer integrierten Schaltung für die Aufbereitung der Messsignale und die Messwertausgabe. Das Magnetfeld zur Erzeugung der Messsignale wird von einem zylindrischen Permanentmagneten 12 bereitgestellt, welcher unmittelbar benachbart zu dem IC-Baustein 11 angeordnet ist. Zwei Leiterbahnen 14 und 16 der integrierten Schaltung 11 sind zum Abbau von Signalspitzen durch einen Kondensator 18 überbrückt und durch Crimpverbindungen 20 und 22 mit Anschlussleitungen 24 und 26 eines Kabels 28 verbunden, dessen vorderes Ende zusammen mit den Leitungen 24 und 26, dem Kondensator 18, dem Permanentmagneten 12 und der integrierten Schaltung 11 zum fertigen, hinsichtlich Aufbau und Wirkungsweise bekannten Bewegungssensor mit Kunststoff umspritzt wird.

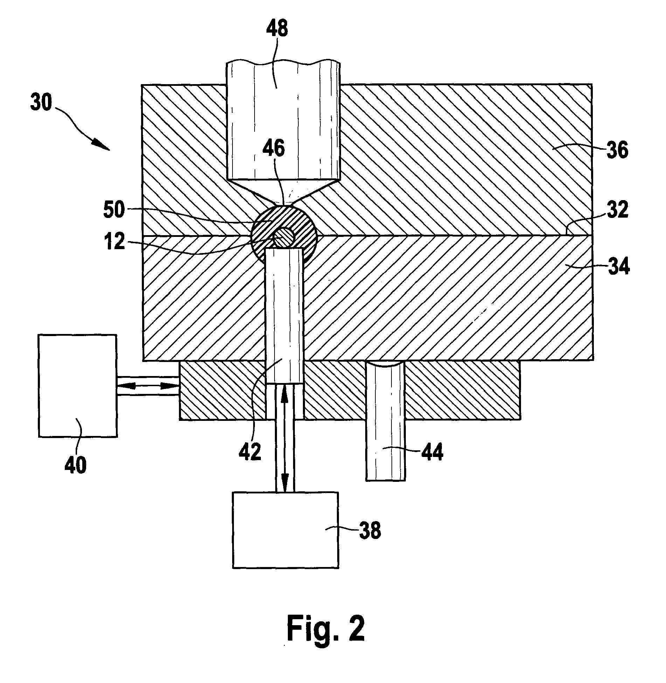

Figur 2 zeigt das Prinzip einer in ihrem Aufbau grundsätzlich ebenfalls bekannten Spritzgießmaschine 30, welche entlang der Linie 32 in ein Unterteil 34 und ein Oberteil 36 geteilt ist. Eine derartige Spritzgießmaschine wird beispielsweise von der Firma ARBURG unter der Bezeichnung 1500 T auf dem Markt angeboten. Die wesentlichen mechanischen Elemente der Maschine sind im Unterteil 34 angeordnet. In der Zeichnung sind hiervon lediglich ein erster Kernzug 38 und ein zweiter Kernzug 40 sowie zwei Kerne 42 und 44 dargestellt. Der erste Kernzug 38 führt dabei die vertikalen Bewegungen und der zweite Kernzug 40 die Horizontalbewegungen der Kerne 42 und 44 aus. Die Maschine 30 enthält zwei Spritzwerkzeuge, von denen in Figur 2 nur ein mit einer Heißkanaldüse 46 ausgestattetes erstes Spritzwerkzeug 48 dargestellt ist.

Die in Figur 2 durch die Kontur des Permanentmagneten 12 nur angedeutete Baugruppe 10 wird in einem ersten Spritzvorgang über die Heißkanaldüse 46 in dem schraffierten Bereich 50 mit thermoplastischem Kunststoff umspritzt und hierdurch bereits in sich stabilisiert für das weitere Spritzverfahren. Wegen seiner Stützfunktion wird der erste Kern 42 im Folgenden auch als Fixiereinsatz bezeichnet.

Nach Abschluss des ersten Spritzvorgangs fährt der erste Kernzug 38 den Kern 42 zurück, wobei er in bekannter Weise über Exzenter oder Schrägschieber gesteuert und während des Spritzvorgangs gegen den Spritzdruck unabhängig von der hydraulischen Leistung des Kernzugs der Spritzmaschine verriegelt wird. Durch den zweiten Kernzug 40 wird dann der zweite Kern 44 für die Endumspritzung im zweiten Spritzvorgang in die Spritzposition verschoben, in welchem die Umspritzung auf der Auswerferseite der Spritzgießmaschine 30 auch in dem in Figur 2 nicht schraffierten Bereich unterhalb des Permanentmagneten 12 durchgeführt wird.

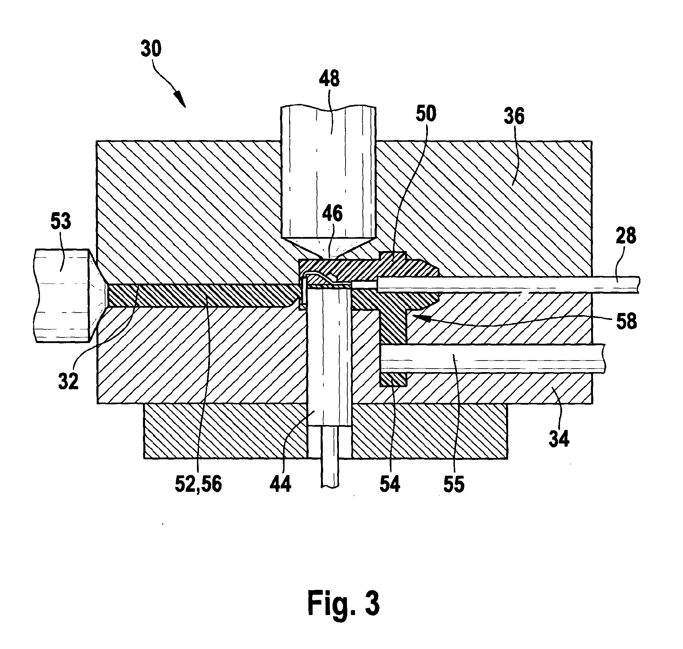

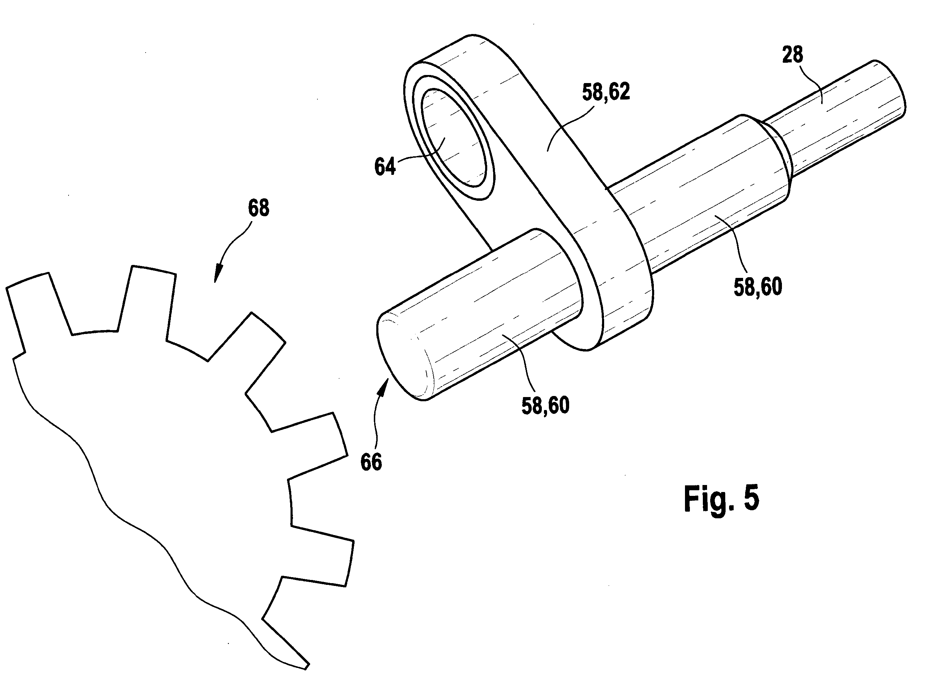

Figur 3 zeigt einen Schnitt durch die Spritzgießmaschine 30 mit einem Kaltkanal 52 eines zweiten Spritzwerkzeuges 53 für die Endumspritzung 58 der Baugruppe 10 auf ihrer von der Heißkanaldüse 46 abgewandten, beim ersten Spritzvorgang durch den ersten Kern 42 abgedeckten Bereich. Hierbei wird die abschließende Kontur des Bewegungssensors gespritzt, wie sie in Figur 5 später dargestellt und erläutert ist. In Figur 3 ist hiervon insbesondere ein Befestigungsflansch 54 erkennbar. Eine Öffnung für eine Befestigungsbuchse 64 wird hierbei durch einen Schieber 55 freigehalten. Der mit 56 bezeichnete, im zweiten Spritzvorgang entstehende Spritzfortsatz im Bereich des Kaltkanals 52 wird nach dem Auswurf des fertigen Sensors aus der Spritzgießmaschine 30 entfernt. Vor dem Auswerfen wurden der durch den ersten Kernzug 38 in Stellung gebrachte und fixierte zweite Kern 44 und der Schieber 55 zurückgefahren, so dass die Spritzgießmaschine 30 für eine Neubestückung bereitsteht.

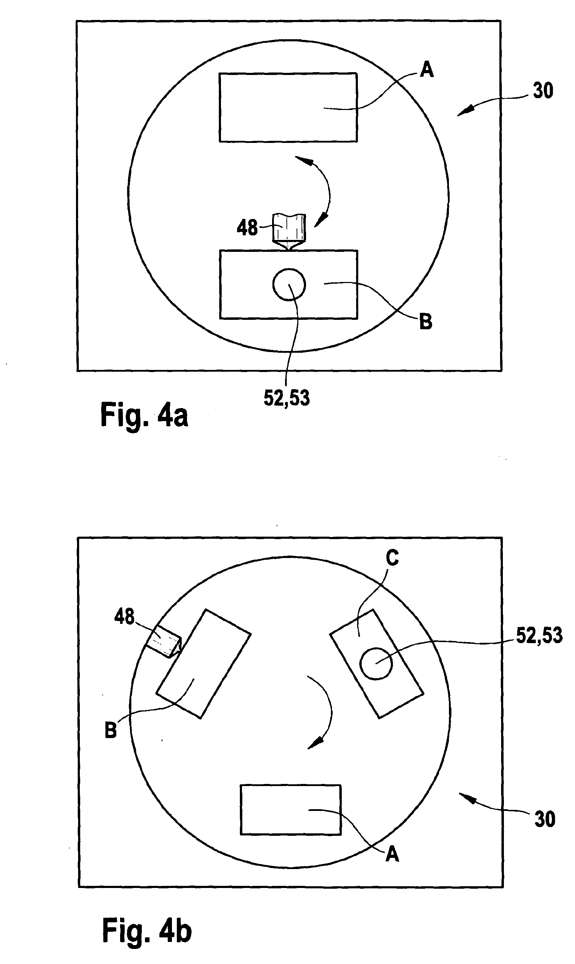

Figur 4a zeigt das Prinzip einer Rundtischspritzmaschine 30 mit zwei Stationen A und B, wie sie anhand der Figuren 2 und 3 bereits erläutert worden ist. In der Station A wird die Baugruppe 10 eingelegt und anschließend die Maschine in die Spritzposition B gedreht, wo die Baugruppe durch den ersten Kern 42 fixiert und der erste Spritzvorgang mittels des ersten Spritzwerkzeuges 48 durchgeführt wird. Nach dem Zurückfahren der Fixierung in Form des ersten, in Figur 4a nicht dargestellten Kerns 42 und dem Einrücken des zweiten Kerns 44 wird in der Station B mit dem zweiten Spritzwerkzeug 53 auch die Endumspritzung der Baugruppe 10 durchgeführt. Die Abstützung und Fixierung der Baugruppe 10 erfolgt durch den nicht dargestellten Kern 44. Nach der Fertigstellung der Endumspritzung wird ebenfalls noch in der Station B der fertige Sensor ausgeworfen und die Maschine in der Station A neu bestückt. Ein derartiges Vorgehen hat den Vorteil, dass nur zwei Stationen angefahren werden müssen, wodurch die Maschine 30 insgesamt preiswert hergestellt werden kann und relativ wenig Platz für ihre Aufstellung benötigt. Außerdem ist der Wärmeverlust beim Spritzvorgang verhältnismäßig gering, da die Maschine nur einmal geöffnet werden muss, wodurch auch die Verschmutzungsgefahr im Spritzbereich verringert wird.

Eine Alternative zur der Ausführung der Rundtischspritzmaschine 30 in Figur 4a ist in Figur 4b dargestellt, wobei die Maschine drei Stationen A, B und C anfährt. In der Station A erfolgt das Bestücken der Maschine, in der Station B der erste Spritzvorgang und in der Station C der zweite Spritzvorgang und der Auswurf des fertig umspritzten Sensors. Eine derartige Anordnung ist zwar aufwendiger in der Herstellung als eine Maschine mit zwei Stationen, andererseits wird jedoch die Gesamtzeit für den Spritzvorgang reduziert und der Produktionsausstoß kann vergrößert werden.

In Figur 5 ist der fertige Bewegungssensor nach dem zweiten Spritzvorgang mit dem gesamten Spritzverguss 60 dargestellt. Als Kunststoff für den Endverguss eignet sich ebenso wie für die Durchführung des ersten Spritzvorgangs zur Fixierung der Baugruppe 10 ein Polyamidwerkstoff, welcher dann die gesamte Baugruppe 10 einschließlich des Endes des Anschlusskabels 28 umhüllt. Der Spritzverguss 60 bildet weiterhin eine Anschlusslasche 62 aus mit einer Befestigungsbuchse 64 für die Montage des Sensors. Das durch den Permanentmagneten 12 erzeugte Magnetfeld tritt an der Stirnseite 66 des Sensors aus und wird durch ein ferromagnetisches Geberrad 68 in Form eines Zahnkranzes moduliert. Wenn der Sensor selbst keinen Magnet 12 besitzt kann alternativ auch das Geberrad 68 magnetisch ausgebildet werden zur Erzeugung eines pulsierenden Magnetfeldes. Als eigentliches Messelement dient beispielsweise ein Hallelement, welches in das IC-Bauteil 11 integriert ist und die durch das Geberrad 68 verursachten Veränderungen des von dem Permanentmagneten 12 erzeugten Magnetfeldes als Messsignale registriert. Diese Messsignale können dann wahlweise zur Bestimmung der Drehgeschwindigkeit, der Beschleunigung, des Beschleunigungsgradienten und/oder des Verdrehwinkels des Geberrades 68 verwendet und über das Anschlusskabel 28 einer nicht dargestellten Auswerteeinheit zugeführt werden.

Durch das erfindungsgemäße Verfahren erzielt man insgesamt eine deutliche Vereinfachung und eine Kosteneinsparung bei der Fertigung eines Bewegungssensors. Die Reduzierung der Arbeitsschritte wird gegenüber bekannten Verfahren insbesondere dadurch erreicht, dass eine Positionierung und Fixierung durch separate Halter zur Aufnahme der Baugruppe 10 entfällt, welche zusammen mit der Baugruppe umspritzt werden. Die Ummantelung des IC-Bausteines 11 erfolgt außerdem deutlich schonender , da die bei bekannten Verfahren durchgeführte Positionierung der Baugruppe in einem Halter nicht mehr erforderlich ist und somit eventuelle Hohllagen des IC-Bausteins vermieden werden, welche zu Beschädigungen durch den Spritzdruck führen können. Außerdem werden bei den bekannten Verfahren eingesetzte Warmverstemmprozesse zur Fixierung der Baugruppe 10 im Halter vermieden, bei denen ebenfalls die Gefahr einer Schädigung des IC-Bauteils 11 besteht. Weitere Vorteile sind die bereits genannte Reduzierung des Platzbedarfs der Anlage in der Fertigungslinie sowie die Reduzierung der Anschaffungskosten für die Spritzgießmaschine 30 und die benötigten Werkzeuge, insbesondere wenn die bei bekannten Verfahren erforderliche Fertigung des Halters entfällt.

## Patentansprüche

1. Verfahren zur Herstellung eines Bewegungssensors, insbesondere eines Drehzahlsensors für die Raddrehung eines Kraftfahrzeuges, wobei eine elektrische Baugruppe (10) mit einer integrierten Schaltung (IC;11) und einem Anschlusskabel (28) durch Spritzgießen mit Kunststoff umhüllt werden, **dadurch gekennzeichnet, dass** in einem ersten Spritzvorgang die Baugruppe (10) durch einen Fixiereinsatz (42) in der Spritzgießmaschine (30) abgestützt und in dem vom Fixiereinsatz (42) abgewandten Bereich zumindest teilweise mit Kunststoff umspritzt wird, dass anschließend der Fixiereinsatz (42) entfernt und durch einen zweiten Kern (44) für die Endumspritzung (58) ersetzt und danach die restliche Umhüllung der Baugruppe (10) und/oder des Anschlusskabels (28) in einem zweiten Spritzvorgang unter Ausbildung der Endkontur gespritzt wird.

2. Verfahren nach Anspruch 1, **dadurch gekennzeichnet, dass** der Spritzvorgang in einer Spritzgießmaschine (30) mit zwei unterschiedlichen Spritzeinheiten (48,53) durchgeführt wird.

3. Verfahren nach Anspruch 1 oder 2, dadurch dass der erste Spritzvorgang mit einer Heißkanaldüse (46) und der zweite Spritzvorgang über einen Kaltkanal (52) ausgeführt werden.

4. Verfahren nach einem der vorhergehenden Ansprüche, **dadurch gekennzeichnet, dass** die elektrische Baugruppe (10) vor dem Umspritzen mittels einer Crimpverbindung (20) mit dem Anschlusskabel (28) verbunden wird.

5. Verfahren nach einem der vorhergehenden Anschlüsse, **dadurch gekennzeichnet, dass** der Spritzvorgang in einer Rundtischspritzmaschine (30) durchgeführt wird.

6. Verfahren nach einem der vorhergehenden Ansprüche, **dadurch gekennzeichnet, dass** in dem ersten Spritzvorgang düsenseitig (46) bereits die Endkontur des Sensors ausgebildet wird.

7. Verfahren nach einem der vorhergehenden Ansprüche, **dadurch gekennzeichnet, dass** nach dem ersten Spritzvorgang der auswerferseitige Fixiereinsatz (42) von einem ersten Kernzug (38) freigegeben und aus dem Werkzeug herausgefahren wird, und danach durch einen zweiten Kernzug (40) der Kern (44) für die Endumspritzung in die Spritzposition eingefahren und wiederum durch den ersten Kernzug (38) in der Spritzposition fixiert wird.

8. Verfahren nach einem der vorhergehenden Ansprüche, dadurch, dass der Spritzvorgang an zwei Stationen (A,B; Fig.4a) durchgeführt wird, indem an der ersten Station (A) die zu umspritzenden Teile (10) in die Spritzgießmaschine (30) eingelegt werden, die Spritzgießmaschine danach in die Spritzposition in der zweiten Station (B) gedreht, dort beide Spritzvorgänge durchgeführt werden und das fertige Spritzteil ausgeworfen wird, und anschließend die Spritzgießmaschine (30) wieder in die Einlegeposition (A) gefahren wird, wo sie neu bestückt wird.

9. Verfahren nach einem der vorhergehenden Ansprüche, **dadurch gekennzeichnet, dass** der erste Spritzvorgang mit einer Heißkanaldüse (46) senkrecht zur Trennebene (32) und der zweite Spritzvorgang über einen Kaltkanal (52) in der Trennebene (32) der Spritzgießmaschine (30) durchgeführt werden.

## Claims

1. Process for producing a motion sensor, in particular a speed sensor for the rotation of a wheel of a motor vehicle, an electrical subassembly (10) with an integrated circuit (IC; 11) and a connection cable (28) being encapsulated in plastic by injection moulding, **characterized in that**, in a first injection-moulding operation, the subassembly (10) is supported by a fixing insert (42) in the injection-moulding machine (30) and at least partially encapsulated in plastic in the region facing away from the fixing insert (42), and **in that** the fixing insert (42) is subsequently removed and replaced by a second core (44) for the final encapsulation (58) and, after that, the remaining encapsulation of the subassembly (10) and/or of the connection cable (28) is injection-moulded in a second injection-moulding operation to form the final contour.

2. Process according to Claim 1, **characterized in that** the injection-moulding operation is carried out in an injection-moulding machine (30) with two different injection-moulding units (48, 53).

3. Process according to Claim 1 or 2, **characterized in that** the first injection-moulding operation is performed with a hot runner nozzle (46) and the second injection-moulding operation is performed by means of a cold runner (52).

4. Process according to one of the preceding claims, **characterized in that** the electrical subassembly (10) is connected to the connection cable (28) before the encapsulation by means of a crimped connection (20).

5. Process according to one of the preceding claims, **characterized in that** the injection-moulding operation is carried out in a rotary-table injection-moulding machine (30).

6. Process according to one of the preceding claims, **characterized in that**, in the first injection-moulding operation, the final contour of the sensor is already formed on the nozzle side (46).

7. Process according to one of the preceding claims, **characterized in that**, after the first injection-moulding operation, the fixing insert (42) on the ejector side is released by a first core puller (38) and moved out of the mould, and after that the core (44) is moved into the injection-moulding position for the final encapsulation by a second core puller (40) and once again is fixed in the injection-moulding position by the first core puller (38).

8. Process according to one of the preceding claims, **characterized in that** the injection-moulding operation is carried out at two stations (A, B; Figure 4a), wherein the parts (10) that are to be encapsulated are placed into the injection-moulding machine (30) at the first station (A), the injection-moulding machine is then turned into the injection-moulding position in the second station (B), both injection-moulding operations are carried out there and the finished injection-moulded part is ejected, and the injection-moulding machine (30) is subsequently moved into the placement position (A) again, where it is re-loaded.

9. Process according to one of the preceding claims, **characterized in that** the first injection-moulding operation is carried out with a hot runner nozzle (46) perpendicularly to the parting plane (32) and the second injection-moulding operation is carried out by means of a cold runner (52) in the parting plane (32) of the injection-moulding machine (30).

## Revendications

1. Procédé de fabrication d'un détecteur de mouvement, en particulier d'un détecteur de vitesse de rotation pour 1a rotation des roues d'un véhicule automobile, un module électrique (10) comprenant un circuit intégré (IC ;11) et un câble de raccordement (28) étant enveloppés de plastique par moulage par injection, **caractérisé en ce que** dans une première opération d'injection, le module (10) est supporté par un insert de fixation (42) dans la machine de moulage par injection (30) et est au moins surmoulé en partie avec du plastique dans la région opposée à l'insert de fixation (42), **en ce qu'**ensuite l'insert de fixation (42) est enlevé et est remplacé par un deuxième noyau (44) pour le surmoulage final (58) et finalement le reste de l'enveloppe du module (10) et/ou du câble de raccordement (28) est injecté dans une deuxième opération d'injection en réalisant le contour final.

2. Procédé selon la revendication 1, **caractérisé en ce que** l'opération d'injection est effectuée dans une machine de moulage par injection (30) ayant deux unités d'injection différentes (48, 53).

3. Procédé selon la revendication 1 ou 2, **caractérisé en ce que** la première opération d'injection est effectuée avec une buse à canal chaud (46) et la deuxième opération d'injection est réalisée par le biais d'un canal froid (52).

4. Procédé selon l'une quelconque des revendications précédentes, **caractérisé en ce que** le module électrique (10), avant le surmoulage, est connecté au moyen d'une connexion par sertissage (20) au câble de raccordement (28).

5. Procédé selon l'une quelconque des revendications précédentes, **caractérisé en ce que** l'opération d'injection est effectuée dans une machine d'injection à table ronde (30).

6. Procédé selon l'une quelconque des revendications précédentes, **caractérisé en ce que** dans la première opération d'injection, le contour final du détecteur est déjà réalisé du côté de la buse (46).

7. Procédé selon l'une quelconque des revendications précédentes, **caractérisé en ce qu'**après la première opération d'injection, l'insert de fixation (42) du côté de l'éjecteur est libéré par un premier tire-noyau (38) et est ressorti de l'outil, et finalement le noyau (44) pour le surmoulage final est introduit dans la position d'injection par un deuxième tire-noyau (40) et est à nouveau fixé dans la position d'injection par le premier tire-noyau (38).

8. Procédé selon l'une quelconque des revendications précédentes, **caractérisé en ce que** l'opération d'injection est effectuée au niveau de deux postes (A, B ; Figure 4a), **en ce que** les pièces à surmouler (10) sont introduites dans la machine de moulage par injection (30) au niveau du premier poste (A), la machine de moulage par injection est ensuite tournée dans la position de pulvérisation au niveau du deuxième poste (B), les deux opérations d'injection sont effectuées à cet endroit et la pièce moulée finale est éjectée, et ensuite la machine de moulage par injection (30) est à nouveau amenée dans la position d'introduction (A), où elle est à nouveau garnie.

9. Procédé selon l'une quelconque des revendications précédentes, **caractérisé en ce que** la première opération d'injection est effectuée avec une buse à canal chaud (46) perpendiculairement au plan de séparation (32) et la deuxième opération d'injection est effectuée par le biais d'un canal froid (52) dans le plan de séparation (32) de la machine de moulage par injection (30).
